# EUROPEAN PATENT APPLICATION

(11) **EP 1 560 214 A2**
(43) Date of publication of application: **03.08.2005**
(21) Application number: 05100374.7
(22) Date of filing: 21.01.2005
(51) Int. Cl.: G11B 20/00

(54) **Recording medium processing device and recording medium processing method**

(30) Priority: 29.01.2004 JP 2004021548
(71) Applicant: Kabushiki Kaisha Toshiba, Tokyo 105-8001 (JP)
(72) Inventor: Fujiwara, Kenji, 105-8001, Tokyo (JP)
(74) Representative: Henkel, Feiler & Hänzel

(57) **Abstract**

A copying permission judging unit judges whether or not to permit copying of contents recorded on a first recording medium based on a first and a second contents identifier read from the first and a second recording medium respectively. Copying from the first recording medium needs the second recording medium corresponding to the contents recorded on the first recording medium, whereby the copying from the first recording medium is restricted.

## Description

### CROSS-REFERENCE TO THE INVENTION

This application is based upon and claims the benefit of priority from the prior Japanese Patent Application No. 2004-021548, filed on January 29, 2004; the entire contents of which are incorporated herein by reference.

### BACKGROUND OF THE INVENTION

### 1. FIELD OF THE INVENTION

The present invention relates to a recording medium processing device which reads and writes information from and to a recording medium.

### 2. DESCRIPTION OF THE RELATED ART

A recording medium such as a CD (Compact Disk), a DVD (Digital Versatile Disk), or the like is used for storage, distribution, and the like of various contents such as video, audio, text, programs, and the like. In other words, contents can be recorded on the recording medium to be stored and distributed.

The contents are generally a copyrighted work which needs to be prevented from being illegally copied.

For this purpose, there is disclosed a technology to restrict reproduction of copied contents using a medium-specific number recorded in an unrewritable state on a recordable medium (See Japanese Patent Laid-open Application No. 2003-157202). There is disclosed another technology to prevent an encrypted program from being used without proper authorization with an IC card storing decryption key data (See Japanese Patent Laid-open Application No. Hei 11-205304).

### SUMMARY OF THE INVENTION

In the above-described technologies, reproduction of copied contents is restricted, but copying itself cannot be always restricted.

In view of the above, an object of the present invention is to provide a recording medium proces s ing device capable o f restricting copying of contents recorded on a recording medium.

A. A recording medium processing device according to the present invention includes a first reading unit configured to read a first contents identifier to identify contents and contents corresponding to the first contents identifier from a first recording medium; a second reading unit configured to read a second contents identifier to identify contents from a second recording medium; a copying permission judging unit configured to judge whether or not to permit copying of the contents recorded on the first recording medium based on the read first contents identifier and the read second contents identifier; and a writing unit configured to write the read contents to a third recording mediumwhen it is judged that the copying is permitted.

Whether or not to permit the copying of the contents recorded on the first recording medium is judged based on the first and second contents identifiers read from the first and second recording mediums respectively. Copying from the first recording medium needs the second recording medium corresponding to the contents recorded on the first recording medium, whereby the copying from the first recording medium is restricted. Namely, only an owner of the second recording medium can copy the contents from the first recording medium.
(1) The read contents are encrypted contents, the second reading unit further reads a reference decryption key which becomes a reference to decrypt the encrypted contents from the second recording medium, and the recording medium processing device may further includes a decryption processing unit configured to decrypt the encrypted contents based on the reference decryption key.
   By encrypting the contents recorded on the first recording medium and recording the reference decryption key of the encrypted contents on the second recording medium, reproduction and copying from the first recording medium can be restricted. Namely, only the owner of the second recording medium can reproduce the contents from the first recording medium.
   It is also possible that the first reading unit reads a first recording medium identifier to identify the first recording medium in place of the first contents identifier from the first recording medium, the second reading unit further reads a second recording medium identifier to identify the second recording medium from the second recording medium, the recording medium processing device further includes a decryption key generating unit configured to generate a decryption key based on the reference decryption key, the first and second recording medium identifiers, and the second contents identifier, and that the decryption processing unit decrypts the encrypted contents based on the decryption key in place of the reference decryption key.
   The decryption key is generated based on the reference decryption key, the first and second recording medium identifiers, and the second contents identifier. Therefore, the decryption of the encrypted contents, that is, the reproduction and copying thereof can be restricted.
(2) It is also possible that the second reading unit further reads a reference decryption key which becomes a reference to decrypt encrypted contents and a second recording medium identifier to identify the second recording medium from the second recording medium, the recording medium processing device further includes a third reading unit configured to read a third recording medium identifier to identify the third recording medium from the third recording medium, an encryption key generating unit configured to generate an encryption key based on the reference decryption key, the second and third recording medium identifiers, and the first contents identifier, and an encryption processing unit configured to encrypt the contents based on the encryption key, and that the writing unit writes the encrypted contents in place of the contents to the third recording medium.
   The contents are encrypted and written using the encryption key generated based on the reference decryption key, the second and third recording medium identifiers, and the first contents identifier. Therefore, the decryption of the encrypted contents, that is, the reproduction and copying thereof can be restricted. Namely, only the owner of the second recording medium can reproduce the contents from the third recording medium.
(3) It is also possible that the first and third recording mediums are each an optical disc from and to which information is read and written by light, and that the second recording medium includes a storage unit configured to store the second contents identifier, and a transmitting unit configured to transmit the second contents identifier stored in the storage unit to the second reading unit.

Contents are scheduled to be recorded on the first and third recording mediums, and an optical disc, for example, can be used as each of the first and third recording mediums.

On the other hand, unlike the first and third recording mediums, contents themselves are not scheduled to be recorded on the second recording medium, and therefore various kinds of recording mediums can be used as the second recording medium. For example, a radio tag which allows information to be read by radio communication with an IC card can be used.

B. A recording medium processing method according to the present invention includes reading a first contents identifier to identify contents and contents corresponding to the first contents identifier from a first recording medium; reading a second contents identifier to identify contents from a second recording medium; judging whether or not to permit copying of the contents recorded on the first recording medium based on the read first contents identifier and the read second contents identifier; and writing the read contents to a third recording medium when it is judged that the copying is permitted.

Whether or not to permit the copying of the contents recorded on the first recording medium is judged based on the first and second contents identifiers read from the first and second recording mediums respectively. Copying from the first recording medium needs the second recording medium corresponding to the contents recorded on the first recording medium, whereby the copying from the first recording medium is restricted. Namely, only the owner of the second recording medium can copy the contents from the first recording medium.

### BRIEF DESCRIPTION OF THE DRAWINGS

FIG. 1 is a block diagram showing a recording medium process ing device according to an embodiment of the present invention.
FIG. 2 is a flowchart showing an example of a processing procedure in the recording medium processing device in Fig. 1.

### DESCRIPTION OF THE EMBODIMENTS

An embodiment of the present invention will be described in detail below with reference to the drawings.

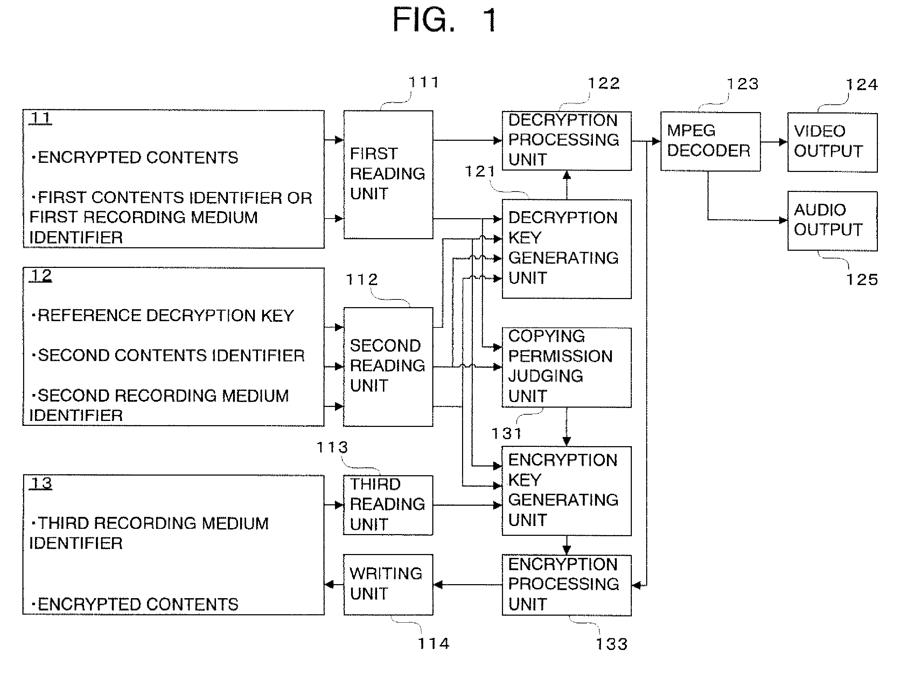

Fig. 1 is a block diagram showing a recording medium process ing device 100 according to the embodiment of the present invention.

The recording medium processing device 100 reads information from a first, a second, and a third recording medium 11, 12, and 13 and writes information to the third recording medium 13. As a result, contents recorded on the first recording medium 11 can be produced and written to the third recording medium 13.

### (Details of the First to Third Recording Mediums)

### A. First Recording Medium 11

The first recording medium 11 is a recording medium only for reproduction or a recording medium for recording, and an optical disc such as a CD (Compact Disc), a DVD (Digital Versatile Disc), or the like can be used as this first recording medium 11. The recording medium only for reproduction means a recording medium on which information is not scheduled to be written by a general user after information is written to the first recording medium 11 at the time of its manufacturing, and it is, for example, a DVD-ROM. The recording medium for recording means a recording medium on which information is scheduled to be written by the general user, and it is, for example a DVD-RW or a DVD-RAM.

The following information is recorded on the first recording medium 11.

### (1) Case where the first recording medium 11 is only for reproduction.

### <Encrypted contents>

These contents contain general data which needs copyright protection, such as image data (containing static images and moving images) such as a movie, audio data such as music, computer software, and so on. The encrypted contents can be decrypted based on a reference decryption key descried later.

### <First contents identifier>

The first contents identifier is an identifier to identify the encrypted contents recorded on the first recording medium 11 and represents the contents on an album-by-album basis (for example, movie by movie or piece by piece of music).

When the first recording medium 11 is only for reproduction, the encrypted contents and the first contents identifier are written at the time of its fabrication.

### (2) Case where the first recording medium 11 is for recording.

### <Encrypted contents>

These contents contain general data which needs copyright protection, such as image data (containing static images and moving images) such as a movie, audio data such as music, computer software, and so on. Namely, these contents are substantially the same as those when the first recording medium 11 is only for reproduction.

The method for encrypting contents is different from that when the first recording medium 11 is only for reproduction in the following respect. These encrypted contents can be decrypted based on the later described reference decryption key, a first and second recording medium identifiers, and a second contents identifier. The number of elements of a key used in this decryption processing is larger than that when the first recording medium 11 is only for reproduction in order to restrict reproduction and further copying from the recording medium for recording on which the contents are recorded from the recording medium only for reproduction. In other words, further copying is restricted by limiting the number of times of copying of the contents recorded on the recording medium only for reproduction to once.

Note that these encrypted contents can be recorded in an area which allows writing by the general user.

### <First recording medium identifier>

The first recording medium identifier is an identifier to distinguish the first recording medium 11 from the other recording mediums, and a different identifier is given to each recording medium.

This first recording medium identifier is recorded in an area in which writing and rewriting by the general user are difficult (for example, a Burst Cutting Area of an optical disc) when this recording medium is manufactured.

Note that information (class information) indicating whether the first recordingmedium 11 is for reproduction only or for recording can be recorded on the first recording medium 11 itself.

### B. Second Recording Medium 12

Information which enables reproduction and copying of contents from the first recording medium 11 is recorded on the second recording medium 12. By using the second recording medium 12 in combination with the first recording medium 11, illegal copying from the first recording medium 11 can be prevented. Hence, information is not scheduled to be written to the second recording medium 12 by the general user.

As the second recording medium 12, a radio tag having a storage unit configured to store information and a communication unit which performs radio communication can be used. It is possible to read information without making contact with the recording medium processing device 100.

The following information is recorded on the second recording medium 12.

### <Reference decryption key>

The reference decryption key is a key which becomes a reference to decrypt the encrypted contents recorded on the first recording medium 11.

When the first recording medium 11 is only for reproduction, the encrypted contents can be reproduced with this reference decryption key itself as a decryption key.

When the first recording medium 11 is for recording, a decryption key is generated based on the first and second recording medium identifiers and the second contents identifier in addition to the reference decryption key, and the encrypted contents can be reproduced with this decryption key.

### <Second contents identifier>

The second contents identifier is an identifier to identify the encrypted contents and represents the contents, for example, on an album-by-album basis (for example, movie by movie or piece by piece of music). When the second recording medium 12 corresponds to the first recording medium 11, the second contents identifier corresponds to the first contents identifier.

When the first and second contents identifiers correspond to each other (for example, coincide with each other), copying of the encrypted contents recorded on the first recording medium 11 is permitted. The copying thereof is permitted only when the first recording medium 11 is only for reproduction, and the copying is not permitted when the first recording medium 11 is for recording. This is because no contents identifier is recorded on the recoding medium for recording.

As described just above, only in the case of a specific combination of the first and second recording mediums 11 and 12 (only when the first recording medium 11 is only for reproduction, and the second contents identifier corresponding to the encrypted contents recorded on the first recording medium 11 is recorded on the second recording medium 12), copying from the first recording medium 11 is possible. This prevents contents recorded on the recording medium only for reproduction from being copied endlessly.

### <Second recording medium identifier>

The second recording medium identifier is an identifier to distinguish the second recording medium from the other recording mediums, and a different identifier is given to each recording medium.

### C. Third Recording Medium 13

The third recording medium 13 is a recording medium for recording (recording medium on which information is scheduled to be written by the general user), and an optical disc such as a CD, a DVD, or the like, more specifically, a DVA-RW, or a DVA-RAM can be used as the third recording medium 13. Namely, the same recording medium as the first recording medium 11 can be used as the third recording medium 13.

The third recording medium 13 is used to copy contents recorded on the first recording medium 11. The third recording medium 13 to which the contents are copied is located in place of the first recording medium 11 and used together with the second recording medium, which makes it possible to reproduce the copied contents. However, another copying cannot be performed.

As just described, as concerns the recording medium for recording, at the time of recording, contents are recorded thereon as the third recording medium 13, and at the time of reproduction, contents can be reproduced therefrom as the first recording medium 11. The distinction between the first and third recording mediums 11 and 13 is for convenience in this sense.

The following information is recorded on the third recording medium 13.

### <Third recording medium identifier>

The third recording medium identifier is an identifier to distinguish the third recording medium 13 from the other recording mediums, and a different identifier is given to each recording medium.

Incidentally, this third recording medium identifier is recorded in an area in which writing and rewriting by the general user are difficult (for example, a Burst Cutting Area of an optical disc) when this recording medium is manufactured.

### <Encrypted contents>

These contents contain general data which needs copyright protection, such as image data (containing static images and moving images) such as a movie, audio data such as music, computer software, and so on. The contents themselves are not particularly different from those on the first recording medium 11.

These encrypted contents are obtained by encrypting contents read from the first recording medium 11 with an encryption key. Incidentally, this encryption key is generated based on the reference decryption key, the second and third recording medium identifiers, and the first contents identifier.

Note that these encrypted contents can be recorded in an area which allows writing by the general user.

### (Details of the Recording Medium Processing Device 100)

The details of the recording medium processing device 100 will be described.

The recording medium processing device 100 includes a first, a second, and a third reading unit 111, 112, and 113, a writing unit 114, a decryption key generating unit 121, a decryption processing unit 122, an MPEG decoder 123, a video output 124, an audio output 125, a copying permission judging unit 131, an encryption key generating unit 132, and an encryption processing unit 133.

The first reading unit 111 reads the encrypted contents and the first identifier (the first contents identifier when the first recording medium 11 is only for reproduction, the first recording medium identifier when the first recording medium 11 is for recording) from the first recording medium 11.

The second reading unit 112 reads the reference decryption key, the second contents identifier, and the second recording medium identifier from the second recording medium 12.

The third reading unit 113 reads the third recording medium identifier from the third recording medium 13.

The writing unit 114 writes encrypted contents which is encrypted in the encryption process ing unit 133 to the third recording medium 13.

The decryption key generating unit 121 generates a decryption key to decrypt the encrypted contents read from the first recording medium. This decryption key is generated in the following manner.

### <Case where the first recording medium 11 is only for reproduction>

When the first recording medium 11 is only for reproduction, the reference decryption key itself which is read from the second recording medium 12 is used as the decryption key.

### <Case where the first recording medium 11 is for recording>

When the first recording medium 11 is for recording, the decryption key is generated using the second contents identifier and the second recording medium identifier in addition to the reference decryption key read from the second recording medium 12, and the first recording medium identifier read from the first recording medium.

Incidentally, whether the first recording medium 11 is for reproduction only or for recording can be judged using the class information recorded on the first recording medium 11 itself.

The decryption processing unit 122 subjects the encrypted contents read from the first recording medium 11 to decryption processing with the decryption key generated by the decryption key generating unit 121 to generate decrypted contents.

The MPEG decoder 123 decodes data in MPEG format contained in the decrypted contents outputted from the decryption processing unit 122 and separates the data into video and audio data.

The video output 124 is a video output device, for example, a CRT (cathode ray tube), an LCD (liquid crystal display), or a PDP (plasma display panel), which converts the video data outputted from the MPEG decoder 123 into video and outputs the video.

The audio output 125 is an audio output device, for example, a speaker or a headphone, which converts the audio data outputted from the MPEG decoder 123 into audio and outputs the audio.

The copying permission judging unit 131 judges whether or not to permit copying of the contents recorded on the fist recording medium 11 based on the first contents identifier read from the first recording medium 11 and the second contents identifier read from the second recording medium 12. In other words, the copying permission judging unit 131 permits the copying of the contents when the first and second contents identifiers correspond to each other, and does not permit the copying of the contents when the first and second contents identifiers do not correspond to each other (copying is prohibited).

As just described, only in the case of a specific combination of the first and second recording mediums 11 and 12 (only when the first recording medium 11 is only for reproduction, and the second contents identifier corresponding to the encrypted contents recorded on the first recording medium 11 is recorded on the second recording medium 12), copying from the first recording medium 11 is possible. This prevents contents recorded on a recording medium only for reproduction from being copied endlessly.

Here, the generation of an encryption key by the encryption key generating unit 132 is controlled based on a result of the judgment of the copying permission judging unit 131. Note that various methods can be used for this control in a range in which permission to write/prohibition against writing the encrypted contents recorded on the recording medium 11 to the third recording medium 13 are controlled. Namely, restriction on operations of the encryption processing unit 133 and the writing unit 114 can prevent writing to the third recording medium 13.

The encryption key generating unit 132 generates the encryption key when copying is permitted by the copying permission judging unit 131. This encryption key is generated using the first contents identifier read from the first recording medium 11, the reference decryption key and the second recording medium identifier read from the second recording medium 12, and the third recording medium identifier read from the third recording medium 13.

Incidentally, when copying is permitted, the first and second contents identifiers correspond to each other, and hence the second contents identifier read from the second recording medium may be used in place of the first contents identifier.

The encryption processing unit 133 encrypts the decrypted contents outputted from the decryption processing unit 122 using the encryption key generated by the encryption key generating unit 132 to generate encrypted contents.

At this time, the encrypted contents recorded on the first and third recording mediums 11 and 13 respectively are encrypted with different encryption keys. By so doing, the contents recorded on the first recording medium 11 are prevented from being copied without any restriction.

### (Operation of the Recording Medium Processing Device 100)

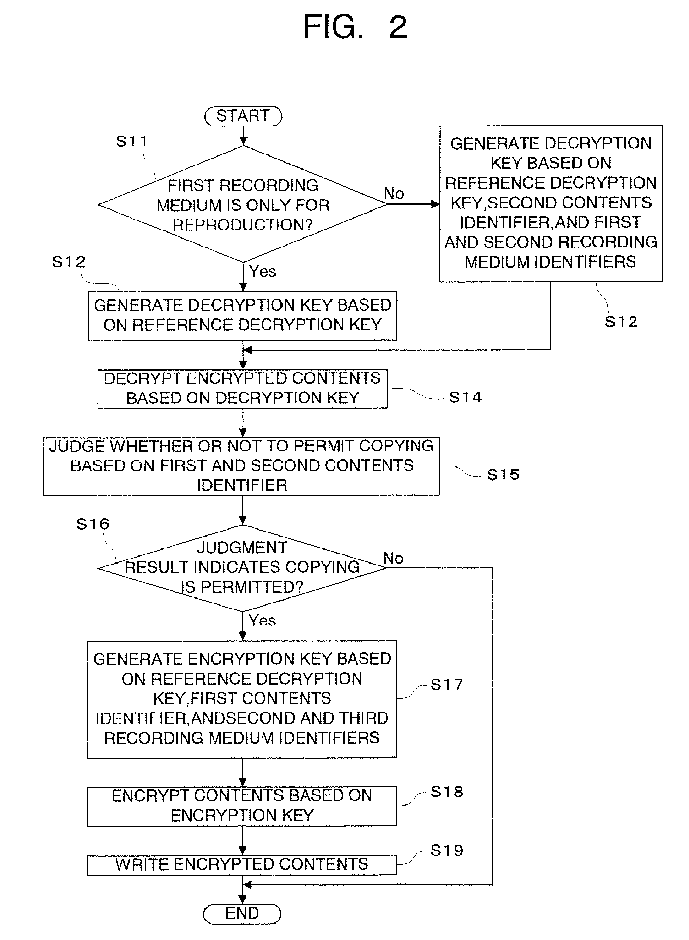

Fig. 2 is a flowchart showing an operation procedure of the recording medium processing device 100.

Hereinafter, the operation procedure of the recording medium processing device 100 will be described based on Fig. 2. The timing of reading information from the first to third recording mediums 11 to 13 is not necessarily shown in Fig. 2. This is because the timing of reading information is not very significant. For example, information from the recording mediums 11 to 13 may be read all at once before step S11 or required information may be read each time. The timing of reading information can be properly set by temporarily recording the information in some recording device (for example, a hard disk, a semiconductor memory) (so-called buffer processing).

### (1) Generation of a decryption key

A decryption key to decrypt the encrypted contents read from the first recording medium is generated by the decryption key generating unit 121 (steps S11 to S13).

Namely, the decryption key generating unit 121 judges whether the first recording medium 11 is for reproduction only or for recording using the class information recorded on the first recording medium 11 itself (step S11).

When the first recording medium 11 is only for reproduction, the reference decryption key itself read from the second recording medium 12 is used as the decryption key (step S12).

When the first recording medium 11 is for recording, the decryption key is generated using the second contents identifier and the second recording medium identifier in addition to the reference decryption key read from the second recording medium 12, and the first recording medium identifier read from the first recording medium (step S13).

### (2) Decryption of the encrypted contents

The decryption processing unit 122 decrypts the encrypted contents read from the first recording medium 11 with the decrypted key generated by the decrypted key generating unit 121 to generate decrypted contents (step S14).

The decrypted contents are separated into video and audio by the MPEG decoder 123 and outputted from the video output 124 and the audio output 125.

### (3) Judgment on copying permission

When the decrypted contents are copied, the copying permission judging unit 131 judges whether or not to permit the copying (step S15).

The copying permission judging unit 131 permits the copying of the contents when the first and second contents identifiers correspond to each other, whereas it does not permit the copying of the contents when the first and second contents identifiers do not correspond.

When the result of this judgment is negative ("No"), the contents are not copied (step S16).

Incidentally, a divergence in step S16 is performed herebefore the generation of an encryption key (step s17), but this divergence may be located before the encryption of the contents (step S18) or the writing of the encrypted contents (step S19).. As a result, the location of the divergence is allowed to have a certain degree of flexibility if the writing of the contents to the third recording medium 13 is restricted.

### (4) Generation of an encryption key

When the result of the judgment in step S15 is affirmative ("Yes"), the encryption key generating unit 132 generates an encryption key (step S17).

This encryption key is generated using the first contents identifier read from the first recording medium 11, the reference decryption key and the second recording medium identifier read from the second recording medium 12, and the third recording medium identifier read from the third recording medium 13.

Incidentally, when copying is permitted, the second contents identifier read from the second recording medium may be used in place of the first contents identifier since the first and second contents identifiers correspond to each other.

### (5) Encryption of the contents

When the encryption key is generated in step S17, the contents are encrypted and written to the third recording medium 13 (steps S18 to S19).

More specifically, the encryption processing unit 133 encrypts the decrypted contents outputted from the decryption processing unit 122 using the encryption key generated by the encryption key generating unit 132 to generate encrypted contents (step S18).

The encrypted contents outputted from the encryption processing unit 133 are written to the third recording medium 13 by the writing unit 114.

The third recording medium 13 on which the contents are thus recorded is substituted for the first recording medium 11, read by the first reading unit 111, and can be reproduced by the decryption key generated in a step corresponding to the previous step S13. The decryption key generated at this time corresponds to the encryption key generated in step S17. This is because the first recording medium identifier in step S13 corresponds to the third recording medium identifier in step S17, and the second contents identifier in step S13 corresponds to the first contents identifier in step S17.

Moreover, further copying from the third recording medium 13 on which the contents are recorded is restricted. This is because a judgment that copying is prohibited is made in another step S15 since no contents identifier is recorded on the third recording medium 13.

As described above, using the combined first and second recording mediums 11 and 12, the contents from the first recording medium 11 can be reproduced and written (copied) to the third recording medium 13. The reproduction and copying from the first recording medium 11 need the existence of the second recording medium 12, which restricts unlimited reproduction and copying from the first recording medium 11.

The third recording medium to which the contents are copied can be reproduced using the second recording medium.

As just described, the reproduction of either of the first recording medium 11 and the third recording medium 13 copied therefrom needs the second recording medium, whereby only an owner of the second recording medium can reproduce the first and third recording mediums 11 and 13. As a result, the contents recorded on the first recording medium 11 can be protected.

Besides, even the owner of the second recording medium 12 cannot perform further copying from the third recording medium 13 to which the contents are copied from the first recording medium 11.

The unlimited copying of the contents on the first recording medium 11 is thus restricted.

### (Other Embodiments)

Embodiments of the present invention can be expanded/modified without being limited to the above-described embodiment, and such expanded/modified embodiments are also included in the technical scope of the present invention.

## Claims

1. A recording medium processing device, comprising:
a first reading unit configured to read a first contents identifier to identify contents and contents corresponding to the first contents identifier from a first recording medium;
a second reading unit configured to read a second contents identifier to identify contents from a second recording medium;
a copying permission judging unit configured to judge whether or not to permit copying of the contents recorded on the first recording medium based on the read first contents identifier and the read second contents identifier; and
a writing unit configured to write the read contents to a third recording medium when it is judged that the copying is permitted.

2. The recording medium processing device as set forth in claim 1,
wherein the read contents are encrypted contents, and
said second reading unit further reads a reference decryption key which becomes a reference to decrypt the encrypted contents from the second recording medium,
the recording medium processing device further comprising a decryption processing unit configured to decrypt the encrypted contents based on the reference decryption key.

3. The recording medium processing device as set forth in claim 2,
wherein said first reading unit reads a first recording medium identifier to identify the first recording medium in place of the first contents identifier from the first recording medium, and
said second reading unit further reads a second recording medium identifier to identify the second recording medium from the second recording medium,
the recording medium processing device further comprising a decryption key generating unit configured to generate a decryption key based on the reference decryption key, the first and second recording medium identifiers, and the second contents identifier,
wherein said decryption processing unit decrypts the encrypted contents based on the decryption key in place of the reference decryption key.

4. The recording medium processing device as set forth in claim 1,
wherein said second reading unit further reads a reference decryption key which becomes a reference to decrypt encrypted contents and a second recording medium identifier to identify the second recording medium from the second recording medium,
the recording medium processing device, further comprising:
a third reading unit configured to read a third recording medium identifier to identify the third recording medium from the third recording medium;
an encryption key generating unit configured to generate an encryption key based on the reference decryption key, the second and third recording medium identifiers, and the first contents identifier; and
an encryption processing unit configured to encrypt the contents based on the encryption key,
wherein said writing unit writes the encrypted contents in place of the contents to the third recording medium.

5. The recording medium processing device as set forth in claim 1, wherein the first and third recording mediums are each an optical disc from/to which information is read/written by light.

6. The recording medium processing device as set forth in claim 1,
wherein the second recording medium comprises:
a storage unit configured to store the second contents identifier; and
a transmitting unit configured to transmit the second contents identifier stored in the storage unit to said second reading unit.

7. A recording medium processing method, comprising:
(A) reading a first contents identifier to identify contents and contents corresponding to the first contents identifier from a first recording medium;
(B) reading a second contents identifier to identify contents from a second recording medium;
(C) judging whether or not to permit copying of the contents recorded on the first recording mediumbased on the read first contents identifier and the read second contents identifier; and
(D) writing the read contents to a third recording medium when it is judged that the copying is permitted.

8. The recording medium processing method as set forth in claim 7,
wherein the read contents are encrypted contents, and
said step (B) comprises reading a reference decryption key which becomes a reference to decrypt the encrypted contents from the second recording medium,
the recording medium processing method further comprising
(E) decrypting the encrypted contents based on the reference decryption key.

9. The recording medium processing method as set forth in claim 8,
wherein said step (A) comprises reading a first recording medium identifier to identify the first recording medium in place of the first contents identifier from the first recording medium, and
wherein step (B) comprises reading a second recording medium identifier to identify the second recording medium from the second recording medium,
the recording medium processing method further comprising generating a decryption key based on the reference decryption key, the first and second recording medium identifiers, and the second contents identifier,
wherein said step (E) comprises decrypting the encrypted contents based on the decryption key in place of the reference decryption key.

10. The recording medium processing method as set forth in claim 7,
wherein said step (B) comprises reading a reference decryption key which becomes a reference to decrypt encrypted contents and a second recording medium identifier to identify the second recording medium from the second recording medium,
the recording medium processing method, further comprising:
reading a third recording medium identifier to identify the third recording medium from the third recording medium;
generating an encryption key based on the reference decryption key, the second and third recording medium identifiers, and the first contents identifier; and
encrypting the contents based on the encryption key to generate encrypted contents,
wherein said step (D) comprises writing the encrypted contents in place of the contents to the third recording medium.

11. The recording medium processing method as set forth in claim 7, wherein the first and third recording mediums are each an optical disc from/to which information is read/written by light.

12. The recording medium processing method as set forth in claim 7,
wherein the second recording medium comprises:
a storage unit configured to store the second contents identifier; and
a transmitting unit configured to transmit the second contents identifier stored in the storage unit.
